# EUROPEAN PATENT APPLICATION

(11) **EP 1 786 006 A1**
(43) Date of publication of application: **16.05.2007**
(21) Application number: 06123879.6
(22) Date of filing: 10.11.2006
(51) Int. Cl.: H01G 4/20

(54) **Film capacitors with improved dielectric properties**

(30) Priority: 14.11.2005 US 273208
(71) Applicant: General Electric Company, Schenectady, NY 12345 (US)
(72) Inventor: Tan, Qi, Niskayuna, NY 12309 (US); Irwin, Patricia Chapman, Altamont, NY 12009 (US); Cao, Yang, Niskayuna, NY 12309 (US)
(74) Representative: Bedford, Grant Richard

(57) **Abstract**

A film capacitor (10) including a first electrode (12) is provided. The film capacitor (10) also includes a first dielectric layer (14) having a first dielectric constant disposed upon a first electrode (12) and a second dielectric layer (16) having a second dielectric constant disposed upon the first dielectric layer (14), wherein the second dielectric constant is at least fifty percent greater than the first dielectric constant. It further includes a second electrode disposed upon the second dielectric layer (16).

## Description

The invention relates generally to capacitors, and more specifically to film capacitors with improved dielectric properties.

Over the last decade, significant increases in capacitor reliability have been achieved through a combination of advanced manufacturing techniques and new materials. Film capacitors can be classified into three types based on the manufacturing technology, namely, film and foil capacitors, metallized film capacitors and mixed technology film capacitors.

Generally, film and foil capacitors consist of two metal foil electrodes separated by a layer of plastic film. One of the commonly used plastic films is polypropylene. Typically, a film and foil capacitor is made by alternating two pieces of aluminum foil with two layers of plastic film. These interleaved layers are wound around a spindle in a manner that prevents the metal layers from touching each other. The film and foil capacitors have been widely used in the power electronics industry. Metallized film capacitors differ from the film and foil capacitors in the sense that the aluminum foils are replaced by a layer of metal film that is vacuum deposited onto the layer of plastic film. The metal film layer is typically extremely thin, in the order of about 200-500 angstroms and is typically aluminum or zinc. The metallized capacitor has the advantages of size, simplicity, and cost of manufacturing. Mixed technology capacitors are a combination of both film and foil capacitors, and metallized film capacitors. Typically, these are high voltage capacitors.

While significant improvements have been made in capacitors in the past few decades, certain issues continue to exist, for example surface defects and electrical stress may lead to a reduction in life of a film capacitor. Surface defects may cause a scattering of breakdown voltages in a dielectric, resulting in varying breakdown voltages at various locations in a capacitor, leading to a lowering of the overall breakdown voltage of the capacitor. Film capacitors are also limited in life due to electrical stress at an anode of the capacitor. This leads to an associated degradation that occurs over a period of time in the capacitor.

Therefore, it would be desirable to design a film capacitor that would address the aforementioned problems and meet the current demands of industry applications.

In accordance with one aspect of the invention, a laminated film capacitor is provided. The film capacitor includes a first electrode and a first dielectric layer disposed upon the first electrode. It also includes a second dielectric layer disposed upon the first dielectric layer wherein the dielectric constant of the second dielectric layer is at least fifty percent greater than the dielectric constant of the first dielectric layer. The film capacitor further includes a second electrode disposed upon the second dielectric layer.

Various features, aspects, and advantages of the present invention will become better understood when the following detailed description is read with reference to the accompanying drawings in which like characters represent like parts throughout the drawings, wherein:
FIG. 1 is a cross sectional view of a laminated film capacitor with a coating of a second dielectric layer disposed over a first dielectric layer in accordance with one embodiment of the present invention;
FIG. 2 is a cross sectional view of a laminated film capacitor with a first dielectric layer interposed between a coating of a second dielectric layer and a third dielectric layer in accordance with one embodiment of the present invention;
FIG. 3 is a cross-sectional view of a laminated film capacitor illustrating a metallized dielectric layer coating on a base dielectric layer in accordance with one embodiment of the present invention;
FIG. 4 is a box plot representation illustrating breakdown voltage ranges for uncoated Ultem® polyetherimide and Ultem® polyetherimide film coated with boron nitride filled Ultem® polyetherimide; and
FIG. 5 is a plot of the dielectric constant and loss factor as a function of weight percentage of boron nitride coating on Ultem® polyetherimide.

As discussed in detail below, various embodiments of the present invention provide a film capacitor with improved dielectric properties. Some of the dielectric properties considered herein are dielectric constant, breakdown voltage, and loss factor. "Dielectric constant" of a dielectric is a ratio of capacitance of a capacitor, in which the space between and around the electrodes is filled with the dielectric, to the capacitance of the same configuration of electrodes in vacuum. As used herein, "Dielectric breakdown voltage" refers to a measure of dielectric breakdown resistance of a material under an applied AC or DC voltage. The applied voltage just before breakdown is divided by thickness of the dielectric to give the breakdown voltage. It is measured in kV/mm. In an ideal dielectric, the voltage wave and the current wave are 90° out of phase. In a real dielectric as the dielectric becomes less than 100% efficient; the current wave begins to lag the voltage in direct proportion. This results in a proportional power loss in the dielectric. The extent to which the current wave deviates from being 90° out of phase with the voltage is defined as the dielectric loss angle. The tangent of this loss angle is known as loss factor or dissipation factor.

A typical film capacitor comprises a polymer film interposed between two electrodes on either side. The polymer film acts as a dielectric in the film capacitor. In one embodiment of the present invention, a film capacitor disclosed herein comprises a first electrode upon which a first dielectric layer is disposed. The film capacitor also includes a second dielectric layer deposited on the first dielectric layer opposite the first electrode having a dielectric constant at least fifty percent greater than the dielectric constant of the first dielectric layer. Further, the film capacitor comprises a second electrode disposed upon the second dielectric layer. In another embodiment of the invention, a film capacitor includes a metallized film interposed between the second dielectric layer and the second electrode.

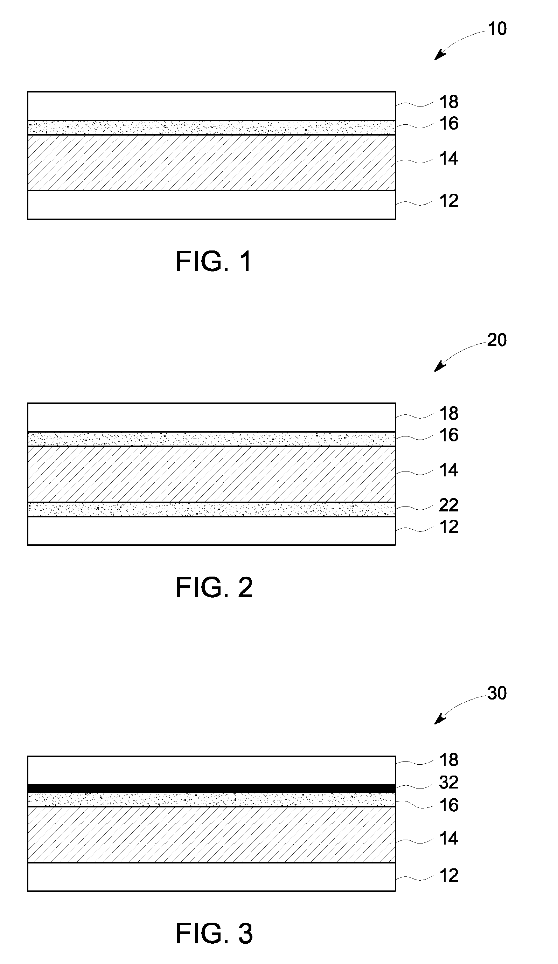

In an illustrated embodiment of the invention as shown in Fig. 1, a cross sectional view of a film capacitor 10 is depicted. The film capacitor 10 includes a first electrode 12, for example a cathode, upon which is disposed a first dielectric layer 14 having a first dielectric constant. A second dielectric layer 16 having a second dielectric constant at least 50% higher than the first dielectric constant is disposed upon the first dielectric layer 14. A second electrode 18, for example an anode, is further disposed upon the second dielectric layer 16.

Degradation in a film capacitor due to electrical stress is known to occur quite often at the anode of a film capacitor. The lifetime of a respective film capacitor can be increased through the addition of the second dielectric layer 16 with a much higher dielectric constant than the first dielectric layer 14 disposed beneath the second electrode 18. In a non-limiting example, the second dielectric constant of the second dielectric layer 16 is about 50% - 75% greater than the first dielectric constant of the first dielectric layer 14. In another non-limiting example, the second dielectric constant of the second dielectric layer 16 is about 75%- 100% greater than the first dielectric constant of the first dielectric layer 14. The second dielectric layer 16 causes a greater voltage gradient to occur at the first electrode 12 than at the second electrode 18. This improves overall voltage endurance of the film capacitor as voltage load on the second electrode 18 decreases. This further results in an increase in breakdown voltage. Consequently, this provides a means for reducing electrical stress at the second electrode 18 (anode) thereby reducing the degradation of the film capacitor. As a result, the lifetime of the film capacitor is enhanced.

The electrodes 12, 18 typically comprise metal foils. In one embodiment, the electrodes 12, 18 comprise at least one of aluminum, copper, or zinc foil. The first dielectric layer 14 typically comprises an organic polymer, an inorganic material or a polymer film. A non-limiting example of an inorganic material is boron nitride (BN), mica, paper, silicon nitride (Si₃N₄) or aluminum nitride (AIN). Some non-limiting examples of a polymer film include polypropylene (PP), polyester (PET), polyphenylene sulfide (PPS), polycarbonate (PC), fluorenyl polester (FPE), polyetheretherketon (PEEK), polyethersulfone (PES), polyvinylidene fluoride (PVDF), polyimide, polyamide-imide, teflon (polytetrafluoroethelyne) (PTFE), polyvinylidene fluoride (PVDF-TrFE), Ultem® (polyetherimide) and combinations thereof. The second dielectric layer 16 may comprise an organic polymer, an inorganic material or polymer composite film. A non-limiting example of an inorganic material is boron nitride (BN), alumina (Al₂O₃), silica (SiO₂), titania (TiO₂), aluminium nitride (AIN) and silicon nitride (Si₃N₄). Some non-limiting examples of the polymer film used as second dielectric layer include polyethylene phthalate (PET), polyphenylene sulfide (PPS), polyvinylidene fluoride (PVDF). Some non-limiting examples of polymer composites comprising inorganic material or polymer can be Ultem® polyetherimide, PP, PET, PVDF, FPE, PEEK, PES, PC or PPS containing BN, Al₂O₃, SiO₂, TiO₂, Niobium pentoxide (Nb₂O₅), Tantalum pentoxide (Ta₂O₅) and combinations thereof. In a non-limiting example, the thickness of the second dielectric layer is in the range between about 0.3 microns to about 5 microns. A non-limiting example of a first dielectric constant is at least about 2. In a non-limiting example, the second dielectric constant is in the range between 3 and 100.

In an exemplary embodiment of the invention, the first dielectric layer 14 has a breakdown voltage in the range of 200 volts (V) and 800 V, whereas the second dielectric layer 16 has a breakdown voltage in the range of 50 V and 700 V. In a non-limiting example, the first dielectric layer 14 has a loss factor in the range of 0.0002 and 0.02, whereas the second dielectric layer 16 has a loss factor in the range of 0.003 and 0.03.

In another illustrated embodiment of the invention as shown in Fig. 2, a film capacitor 20 is seen. In this embodiment of the invention, a third dielectric layer 22 is interposed between the first electrode 12 and the first dielectric layer 14. A second dielectric layer 16 is disposed upon the first dielectric layer 14. The dielectric constants of dielectric layers 16 and 22 are at least 50% higher than that of dielectric layer 14. In a non-limiting example, the second dielectric constant of dielectric layer 16 is between about 50% and 75% greater while the third dielectric constant of dielectric layer 22 is between about 75% and 100% greater than the said first dielectric constant of the first dielectric layer 14. In another non-limiting example, the second dielectric constant of dielectric layer 16 is between about 75% and 100% greater while the third dielectric constant of dielectric layer 22 is between about 50% and 75% greater than the first dielectric constant of the first dielectric layer 14. Further, in another non-limiting example, both the second dielectric constant of dielectric layer 16 and the third dielectric constant of dielectric layer 22 are between about 50% and about 75% greater than the first dielectric constant of the first dielectric layer 14. In another non-limiting example, both the second dielectric constant of dielectric layer 16 and the third dielectric constant of dielectric layer 22 are between about 75% and about 100% greater than the first dielectric constant of the first dielectric layer 14.

In yet another embodiment of the invention as shown in Fig. 3, a film capacitor 30 is shown. In this embodiment of the invention, a coating of metal 32 is vacuum deposited on a dielectric layer 16 and is interposed between the dielectric layer 16 and a second electrode 18. The film capacitor 30 also includes a first dielectric layer 14 interposed between the first electrode 12 and a second dielectric layer 16. A non-limiting example of the coating of metal includes a coating of evaporated aluminum. The dielectric layer 16 has a second dielectric constant at least 50% higher than the first dielectric constant of the first dielectric layer 14.

The aforementioned embodiments present some non-limiting advantages such as increase in dielectric constant, increase in dielectric breakdown voltage, reduction in surface defects and extended lifetime for film capacitors. Depending on the coating or laminating materials, their higher corona resistance and charge trapping capability could allow the base polymer to work under higher voltage and pulsed power. Polymers containing certain nanoparticles such as Al₂O₃ or BN have been found to show higher breakdown strength and dielectric constant. Particle filled polymers also could offer increased thermal conductivity. The higher glass transition temperature of Ultem® also allows a higher operation temperature of the capacitors. Surface defects, as previously described, cause a scattering of breakdown voltages in a dielectric resulting in varying breakdown voltages at various locations in a capacitor.

Consequently, when such surface defects are reduced as in the case of the aforementioned embodiments, a narrower breakdown voltage range results.

The dielectric material of various embodiments of the present invention may be coated in several ways. These include spin coating, dip coating, brush painting, solvent casting, chemical vapor deposition and lamination of a thinner layer of the second polymers or polymer composites. In a non-limiting example, a surface of the first dielectric layer is cleaned to remove dust and contamination to enable a coated dielectric film to adhere to the base dielectric film. Non-limiting examples of cleaning include wet or chemical cleaning, plasma cleaning, or any combination thereof. Adherence of the coated dielectric material to the base dielectric film is desirable since voids or defects at an interface between the coated dielectric film and the base dielectric film can reduce the breakdown voltage. In one embodiment of the present invention, a coating material used has a dielectric constant at least 50% greater than the dielectric constant of the base dielectric film. In some embodiments, the coating material includes an organic polymer or an inorganic material or polymer. Non-limiting examples of a method of coating include coating from a solution, coating using chemical vapor deposition, plasma polymer polymerization, or a physical sputtering method.

### EXAMPLES:

The examples that follow are merely illustrative, and should not be construed to be any sort of limitation on the scope of the claimed invention.

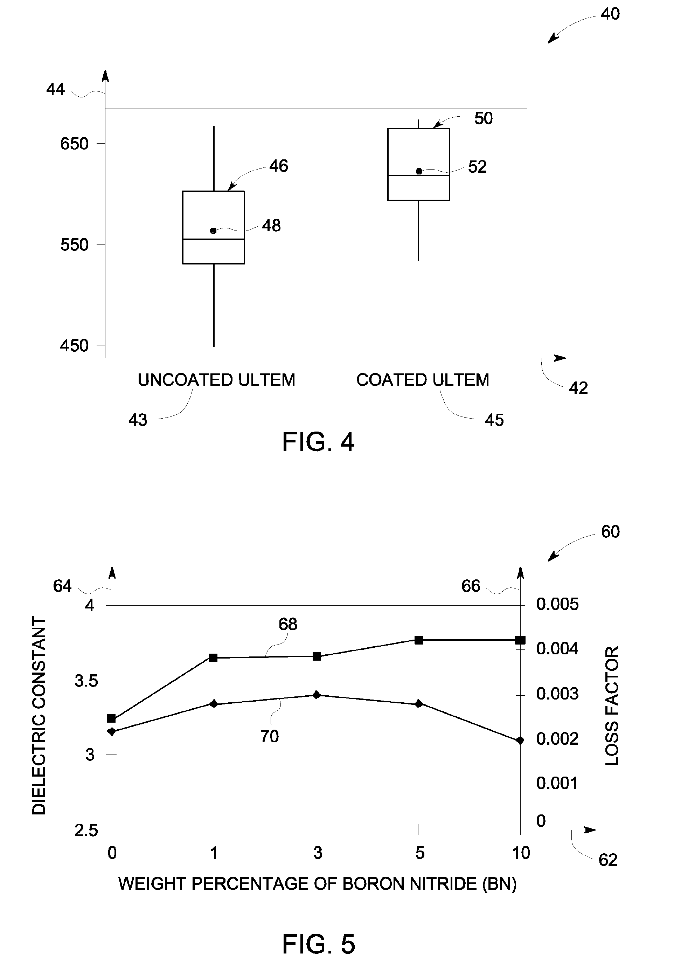

Fig. 4 is a graphical comparison 40 of the mean breakdown voltage, (shown generally by reference numeral 48) for an uncoated polymer film Ultem® polyetherimide, and the mean breakdown voltage (shown generally by reference numeral 52) for an Ultem® polyetherimide film coated with boron nitride filled Ultem® polyetherimide using a statistical t-test. Other statistical tools can be used. The X-axis 42 represents process for uncoated Ultem® polyetherimide 43 and Ultem® polyetherimide film coated with boron nitride filled Ultem® polyetherimide 45. The Y-axis 44 represents the breakdown voltage. Box plot 46 represents the breakdown voltage range in the case of uncoated Ultem® polyetherimide and box plot 50 represents the same in the case of Ultem® polyetherimide film coated with boron nitride filled Ultem® polyetherimide. As can be observed, there is a narrower range of breakdown voltages in the case of coated Ultem® polyetherimide as compared to the case of uncoated Ultem® polyetherimide. This indicates that adding a coating on a polymer film reduces the defects on a surface of the film, which in turn reduces the scattering of breakdown voltage at various locations.

Fig. 5 is a graphical representation 60 of dielectric constant and loss factor for a boron nitride filled Ultem® polyetherimide film as a function of the weight percentage of boron nitride. The X-axis 62 represents the weight percentage of boron nitride. The Y-axes 64 and 66 represent the dielectric constant and the loss factor respectively. As seen in plot 68, the dielectric constant increases from 3.25 to 3.7 with addition of up to 1% weight of boron nitride after which it approaches a constant value with addition of up to 10% weight of boron nitride. As seen in plot 70, there seems to be an increasing trend up to 3% weight of boron nitride after which it seems to be decreasing up to 10% weight. Thus, it can be inferred that about 1%- 5 % of addition of boron nitride into Ultem® polyetherimide or other polymer is desirable for an enhanced performance of a laminated film capacitor.

While only certain features of the invention have been illustrated and described herein, many modifications and changes will occur to those skilled in the art. It is, therefore, to be understood that the appended claims are intended to cover all such modifications and changes as fall within the true spirit of the invention.

### ELEMENT LIST

- 10: Film capacitor
- 12: First electrode
- 14: First dielectric layer
- 16: Second dielectric layer
- 18: Second electrode
- 20: Film capacitor
- 22: Third dielectric layer
- 30: Film capacitor
- 32: Metal vacuum
- 40: Graphical comparison
- 42: X axis representing different processes
- 43: Uncoated ULTEM
- 44: Y axis representing breakdown voltage
- 45: Coated ULTEM
- 46: Box plot of breakdown voltage range of uncoated ULTEM
- 48: Mean breakdown voltage of uncoated ULTEM
- 50: Box plot of breakdown voltage range of boron nitride coated ULTEM
- 52: Mean breakdown voltage of boron nitride coated ULTEM
- 60: Graphical representation of dielectric constant and loss factor versus weight percentage of boron nitride
- 62: X axis representing weight percentage of boron nitride
- 64: Y-axis representing dielectric constant
- 66: Y-axis representing loss factor
- 68: Plot of dielectric constant
- 70: Plot of loss factor

## Claims

1. A capacitor (10) comprising:
a first electrode (12);
a first dielectric layer (14) disposed upon said first electrode (12), wherein said first dielectric layer (14) has a first dielectric constant;
a second dielectric layer (16) disposed upon said first dielectric layer (14), opposite said first electrode (12) wherein said second dielectric layer (16) has a second dielectric constant that is at least fifty percent greater than said first dielectric constant; and
a second electrode (18) disposed upon said second dielectric layer, opposite said first dielectric layer (14).

2. A capacitor (10) in accordance with claim 1, wherein said second dielectric layer (16) has a second dielectric constant between 50% and 75% greater than the said first dielectric constant.

3. A capacitor (10) in accordance with claim 1, wherein said second dielectric layer (16) has a second dielectric constant between 75% and 100% greater than the said first dielectric constant.

4. A capacitor (10) in accordance with any preceding claim, wherein said first dielectric layer comprises an organic polymer or an inorganic material.

5. A capacitor (10) in accordance with any preceding claim, wherein said first dielectric layer (14) has an operating temperature in the range of 100 degrees kelvin and 300 degrees kelvin.

6. A capacitor in accordance with any preceding claim, wherein said second dielectric layer (16) has an operating temperature in the range of 100 degrees kelvin and 300 degrees kelvin.

7. A capacitor (10) in accordance with any preceding claim, wherein said first dielectric layer (14) has a breakdown voltage in the range of 200 volts and 800 volts.

8. A capacitor (10) in accordance with any preceding claim, wherein said second dielectric layer (16) has a breakdown voltage in the range of 50 volts and 700 volts.

9. A capacitor (10) in accordance with any preceding claim, further comprising a metallized film (32) interposed between said second dielectric layer (16) and said second electrode (18).

10. A capacitor (10) in accordance with any preceding claim, further comprising a third dielectric layer (22) interposed between said first electrode (12) and said first dielectric layer (14), wherein said third dielectric layer (22) has a third dielectric constant that is at least fifty percent greater than said first dielectric constant.
